(19) Europäisches Patentamt

European Patent Office

Office européen des brevets

(11) **EP 0 570 469 B1**

(12) **EUROPEAN PATENT SPECIFICATION**

(45) Date of publication and mention
of the grant of the patent:
**07.01.1998 Bulletin 1998/02**

(21) Application number: **92904865.0**

(22) Date of filing: **04.02.1992**

(51) Int. Cl.$^6$: **C01F 7/50**

(86) International application number:
**PCT/DK92/00035**

(87) International publication number:
**WO 92/13801 (20.08.1992 Gazette 1992/22)**

(54) **A PROCESS FOR RECOVERING ALUMINIUM AND FLUORINE FROM FLUORINE CONTAINING WASTE MATERIALS**

VERFAHREN ZUR WIEDERGEWINNUNG VON ALUMINIUM UND FLUOR AUS FLUORHALTIGEN ABFÄLLEN

PROCEDE DE RECUPERATION D'ALUMINIUM ET DE FLUOR DANS DES DECHETS CONTENANT DU FLUOR

(84) Designated Contracting States:
**AT BE CH DE DK ES FR GB GR IT LI LU MC NL SE**

(30) Priority: **05.02.1991 DK 19391**

(43) Date of publication of application:
**24.11.1993 Bulletin 1993/47**

(73) Proprietors:
• **KAABER, Henning**
  **DK-3520 Farum (DK)**
• **Moellgaard, Mogens**
  **DK-3660 Stenloese (DK)**

(72) Inventors:
• **KAABER, Henning**
  **DK-3520 Farum (DK)**
• **Moellgaard, Mogens**
  **DK-3660 Stenloese (DK)**

(74) Representative:
**Hegner, Mogens et al**
**c/o Hofman-Bang & Boutard, Lehmann & Ree A/S,**
**Hans Bekkevolds Allé 7**
**2900 Hellerup (DK)**

(56) References cited:
**GB-A- 2 056 422          US-A- 4 508 689**

**Description**

BACKGROUND OF THE INVENTION

The invention relates to a process for recovering aluminium fluoride from flouride containing waste materials from the production of aluminium metal [FCWM].
Such processes are of technological importance

- partly because depositing of FCWM is not acceptable for environmental reasons due to leaching out of fluorides and other ecologically harmful salts by the action of rain water
- partly because FCWM is an easily accessible, inexpensive starting material for the production of $AlF_3$ which can be used in processes for the production of aluminium by electrolytic reduction of alumina.

Typical examples of FCWM include:

- spent potlining retrieved from an aluminium electrolytic reduction cell [SPL];
- spent potlining ash [SPLA] produced by incinerating SPL;
- cold bath material, i.e. solidified electrolyte from the electrolytic reduction cells, the composition being a mixture of cryolite, chiolite, aluminium fluoride, calcium fluoride, and aluminium oxide; and
- other fluorine containing waste materials, such as filter dust and black sooth.

The chemical composition of FCWM may vary within wide limits, but the main components are NaF, $AlF_3$, $NaF \cdot AlF_3$ double salts, including cryolite, Al metal, $Al_2O_3$, silica and mixed silicates and sodium carbonate and hydroxide. SPL comprises further a rather large amount of carbon and refractory lining material.
Thus a typical sample of SPL may contain the following components within the indicated ranges:

| | |
|---|---|
| NaF | 8-12 % |
| $3NaF, AlF_3$ (cryolite) | 12-16 % |
| $Na_2CO_3$ | 3-7 % |
| NaOH | 3-5 % |
| C | 25-50 % |
| $Al_2O_3$ (including Al metal) | 5-25 % |
| $CaF_2$ | 2-4 % |
| $SiO_2$ | 1-10 % |

A typical sample of SPLA may contain the following components within the indicated ranges:

| | |
|---|---|
| F (mainly as NaF, $AlF_3$ and mixed fluorides): | 20-30% |
| Al (mainly as Al metal, $Al_2O_3$, $AlF_3$ and mixed fluorides): | 10-25% |
| Na (mainly as NaF, and mixed fluorides, and sodium oxide and carbonate): | 15-25% |
| Si (mainly as silica and silicates): | 5-10% |
| C (as carbon): | 2-10% |
| Ca (mainly as oxide and fluoride): | 1-2 % |

It has been suggested to recover fluorine from SPL by the so-called pyrohydrolysis processes comprising

- burning the carbon in the potlining;
- raising the temperature to about 1200°C;
- reacting the fluorides with steam to produce hydrogen fluoride which is removed from the reaction zone as a gas.

The hydrogen fluoride might then be used for the production of $AlF_3$.

Such processes are described in e.g USPS 2 858 198.

However, the pyrohydrolysis processes have not yet been utilized in commercial scale even though these processes have been under development for more than 10 years. The most serious problems encountered during performance of the pyrohydrolysis processes are corrosion problems caused by the presence of $H_2O$ and HF at extreme temperatures.

It has further been suggested to recover fluorides as sodium and/or aluminium fluorides from e.g. SPL by wet processes.

For instance, it has been proposed to recover fluoride values such as cryolite from SPL material by treating finely divided SPL material with an aqueous caustic solution to effect reaction between the fluoride values or cryolite therein with sodium hydroxide to yield water soluble sodium fluoride and water soluble sodium aluminate and then to acidify the resulting solution, e.g. by introduction of carbon dioxide, to precipitate cryolite therefrom. This method of recovering cryolite from cell lining material suffers from the disadvantage of requiring a considerable amount of excess sodium hydroxide which is costly while the time necessary to effect the reaction is somewhat prolonged with the further disadvantage that it is accompanied by much foaming due to gas formation.

Another alkaline leaching process in which fluorine is recovered as NaF is described in EPPS 117 616.

In this process the cryolite-containing SPL is treated with an aqueous caustic soda solution in order to break down the cryolite into sodium fluoride and sodium aluminate.

According to one aspect the caustic soda solution contains from 200 to 400 g/l caustic (calculated as $Na_2CO_3$). The liquor is separated from the solid residue after the treatment and then the sodium fluoride is extracted from the solid residue by contacting with water (including a dilute aqueous sodium fluoride solution).

According to another aspect the caustic soda solution contains from 20 to 70 g/l caustic (calculated as $Na_2CO_3$). The caustic soda solution is separated from the undissolved residue, and concentrated by evaporation thereby causing the precipitation of solid sodium fluoride from said solution. Finally, the the precipitated sodium fluoride is separated from the caustic soda solution.

However, the recovery of aluminium fluorides from FCWM is rather difficult when basic leaching methods are used because precipitation of aluminium and fluoride from an aqueous sodium containing solution will inevitably lead to cryolite as precipitated product, unless special and rather complicated measures are taken.

It has further been suggested to process SPLA and SPL by processes involving treatment with sulphuric acid.

In USPS 4 900 535 there is described a process which involves treating SPLA with concentrated sulphuric acid at elevated temperatures, whereby the fluoride values are reacted to and withdrawn as HF.

A similar process for treating SPL is described in GB 2 056 422 A.

These processes exhibit essentially the same inconveniences as the pyrohydrolysis processes and have not been carried out on commercial scale.

It has also been suggested to recover Al and F from SPL by acid treatment processes operating at more moderate conditions in which fluorine is not recovered as gaseous HF.

In USPS 2 186 433 there is described a process for recovery of aluminium and fluorine compounds, actually cryolite, from SPL, wherein the aluminium and fluorine compounds contained in the SPL are brought into solution by treating the SPL with a diluted aqueous leaching solution containing an acid selected from the group consisting of hydrochloric acid and sulphuric acid, and containing an aluminium salt of said acids. The aluminium and fluorine compounds contained in the extract so obtained are then precipitated as cryolite by the addition of hydrofluoric acid and an alkali salt.

However, these acid leaching processes present problems of their own which mainly consist in

- contamination of process liquors and precipitated end products due to dissolution of iron and silica and coprecipitation of iron hydroxides and silica; and
- environmentally unacceptal production of HCN, $H_2S$ and phosphines in the acid leaching step.

Other acid leaching processes have been suggested comprising

- a leaching step wherein comminuted SPL is leached with an aqueous acid solution;

- a deironing step wherein iron is removed from the liquid phase produced in the filtration step; and

- a precipitation step wherein not cryolite but aluminium fluorides are precipitated from the liquid exit phase from the deironing step.

A variant of this process is described in USPS 4 889 695 which relates to a two step leaching process wherein SPL is leached with a caustic solution, preferably having a concentration of about 14 g/L NaOH in a first leaching step and subsequently with an acid aqueous solution of aluminium sulfate and sulfuric acid. After removal of iron from the liquor from the acid leaching step in a separate deironing step the two leaching liquors are united and aluminium fluoride is precipitated under carefully controlled conditions.

According to USPS 4 597 953 improved fluoride recovery from SPL should be obtained by leaching with an aqueous acid leaching solution having an aluminium sulfate/sulfuric acid ratio in the range from about 0.75 to 1.0.

The precipitation of aluminium fluoride from a solution produced in an acid leaching method is complicated by the presence of "foreign ions", i.e. ions different from Al and F in the liquor. Sodium ions constitute a special problem because sodium and aluminium double salts, e.g. Chiolite and/or Cryolite, may be precipitated instead of aluminium fluoride in the precipitation step.

According to USPS 4 508 689 an improved yield of sodium-poor aluminium fluoride hydroxide should be obtained when the precipitation is carried out from an acid solution of ions of Al, F and Na which is incompletely neutralized with a basic solution of a sodium compound to increase the pH into the range of about 5.0 to 5.6. According to the specification incomplete neutralization to pH values below about 5 results in a significant loss of fluorine values.

It is the object of the present invention to provide an improved wet process for recovering aluminium fluoride from FCWM, in particular from SPL and SPLA, whereby compared with the prior art

- the amount of fluoride extracted is increased
- leaching of less fine starting material is made possible and filtration problems are thereby reduced
- expenditure for chemicals is reduced
- the lay-out of the process is more simple
- the problems of co-precipitation of contaminating materials (such as Si, Fe and Na) are reduced
- there is precipitated an aluminium fluoride product, in the form of $AlF_2OH$ hydrate, with high purity
- it is possible to process starting materials having extremely varying compositions
- it is possible to obtain a uniform end product even when the starting materials exhibit extremely varying compositions.

## SUMMARY OF THE INVENTION

In accordance with the present invention these objects are achieved by a process for recovering aluminium and fluorine from FCWM as $AlF_2OH$ hydrate comprising:

- leaching FCWM with dilute sulphuric acid in an acid leaching step to produce an acid slurry containing fluorine, sodium and aluminium dissolved in the aqueous phase;

- if needed, adjusting the amount of dissolved aluminium in the acid leaching step by addition of aluminium metal and/or acid soluble aluminium compounds so that the molar ratio "F"/"Al" is within the interval from about 1.8 to 2.2, where "F" designates the number of moles of leachable fluorine in the treated portion of FCWM and "Al" designates the number of moles of leachable aluminium in the treated portion of FCWM plus optionally added aluminium;

- adjusting the amount of sulphuric acid added in the acid leaching step so that

    i) the molar ratio

$$("Na"/2 + "F"/4)/"SO^{--}_4"$$

    is less than or equal to 1,
    where "Na" designates the number of moles of leachable sodium in the treated portion of FCWM plus the number of equivalents of caustic optionally added to the process in the steps preceeding a final $AlF_2OH$ precipitation step and "$SO^{--}_4$" designates the number of moles of sulfate ions added as $H_2SO_4$ or otherwise; and
    ii) the pH value of the aqueous phase in the aqueous slurry is kept within a range from about 0 to 3, preferably from about 1 to 2, during and at the termination of the leaching step;

- withdrawing the acid slurry from the acid leaching step;

- adjusting the pH of the aqueous phase in the slurry withdrawn from the acid leaching step to a value within the range from about 3.7 to 4.1 by addition of a caustic aqueous solution, preferably of sodium hydroxide, in a silica-precipitation step, at a temperature not exceeding 60 °C; and allowing silica to precipitate during a precipitation, ageing and sedimentation period of not less than 0.5-1 h;

- separating the reaction mixture from the silica-precipitation step into a solid phase containing the precipitated silica and the non-soluble residues of the FCWM and a purified solution containing aluminium, fluorine and sodium as main components and iron as $Fe^{++}$ ions;

- precipitating $AlF_2OH$ hydrate from the purified solution withdrawn from the silica precipitation step in an $AlF_2OH$ precipitation step by increasing the temperature of the solution to and maintaining the temperature at a value within the inverval from about 90 °C to the boiling point of the aqueous phase, gradually increasing the pH value to about 3.7 to 4.1 by controlled continuous addition of an aqueous caustic solution, e.g. of sodium hydroxide;

- maintaining reducing and/or non-oxidizing operating conditions during the acid leaching step, the silica precipitation step and the $AlF_2OH$ precipitation step in order to prevent oxidation of $Fe^{++}$ to $Fe^{+++}$; and

- separating and withdrawing the precipitated $AlF_2OH$ hydrate from the $AlF_2OH$ precipitation step.

In the present text "the number of moles of leachable fluorine/aluminium/sodium in the treated portion of FCWM" is defined as the number of moles of fluorine/aluminium/sodium transferred to the aqueous phase in the leaching steps, comprising the acid leaching step and an optional preliminary leaching step which is further described below.

The number of moles of leachable fluorine/aluminium/sodium in the treated portion of FCWM can easily be determined by simple leaching experiments.

It has been found that optimum recovery of aluminium and fluorine values as $A1F_2OH$ hydrate, including as well optimum leaching as optimum precipitation, is achieved when operating with an amount of aluminium ions in the leaching liquor in the acid leaching step which ensures that the molar ratio "F"/"Al", as defined above, is close to 2. For the same reason it is important to operate with an amount of sulphuric acid in the leaching liquor which ensures that the molar ratio ("Na"/2 + "F"/4)/"$SO^{--}_4$", as defined above, is not greater than 1.

In general FCWM exhibits a molar ratio between leachable fluorine and leachable aluminium between about 1 and 6.

When it is desired to recover aluminium and fluorine from an FCWM for which said molar ratio is less than about 2 it may be advantageous, but not necessary, to add another type of FCWM, such as e.g. cold bath material, having a high fluorine/aluminium ratio, i.e. a ratio grater than or equal to 3 and use this mixture as starting material.

The addition of aluminium ions to the acid leaching step is most conveniently performed by addition of aluminium metal, aluminium hydroxide, $Al_2O_3$ in acid soluble form, or aluminium sulfate either to a stock solution of dilute sulphuric acid for the acid leaching step or directly to the acid leaching step.

In order to prevent formation of gaseous hydrogen fluoride it is important to maintain the pH value of the aqueous phase in the acid leaching step above about 0, preferably above about 1, during the leaching process. It is further important that the pH value is maintained below about 3, preferably below about 2, in order to prevent precipitation of silica, ferro hydroxide and aluminium fluorides during the acid leaching process.

It is an essential feature of the present invention that problems due to contamination of the end product with iron are avoided without performing a separate, rather cumbersome iron removal step. According to the present invention these problems are avoided by ensuring that iron is exclusively present as ferro irons, $Fe^{++}$, and by preventing precipitation of ferro hydroxide by maintaining the pH value below about 5 during all process steps.

It is important that the pH adjustment in the silica-precipitation step is carried out in such way that pH values above about 5 are prevented even locally in order to prevent precipitation of ferro hydroxide and aluminium fluorides, including cryolite and the desired end product $AlF_2OH$ hydrate. Therefore it is very important to add the caustic aqueous solution at a carefully controlled rate with effective agitation in order to prevent local over concentration of caustic.

It is further very important that the temperature does not exceed about 60 °C in the silica-precipitation step because precipitation of $AlF_2OH$ hydrate will occur at temperature above about 60 °C.

It is also very important to operate below and within the pH range from about 3.7 to 4.1 in the $AlF_2OH$ hydrate precipitation step. Thereby coprecipitation of cryolite and other double salts as well as of ferro hydroxide is effectively prevented. In this step it is also very important to add the caustic aqueous solution at a carefully controlled rate with effective agitation in order to prevent local over concentration of caustic.

The solid material withdrawn from the silica-precipitation step is a waste material which can be disposed of in an ecologically acceptable way.

The precipitated $AlF_2OH$ hydrate product may be calcined at a temperature within the interval 500-600 °C to yield a mixture of $AlF_3$ and $Al_2O_3$ which is suitable for reuse in processes for the production of aluminium by electrolytic reduction of alumina.

The process according to the invention is particularly suited for processing SPL and SPLA.

It is a characteristic advantageous feature of the present invention that even though the composition, including the fluorine/aluminium ratio, of the FCWM used as starting material may vary within wide limits, the present process will invariably yield a uniform AlF$_2$OH hydrate end product with a fluorine/aluminium ratio very close to 2.

A preferred embodiment of the present invention comprises

- subjecting the FCWM to a preliminary leaching process in a preliminary leaching step in which FCWM is leached with water or a weakly caustic aqueous leaching solution, e.g. of sodium hydroxide, to produce a first fluorine, sodium and aluminium containing caustic solution and a solid pre-leached FCWM;

- transferring the pre-leached FCWM to the acid leaching step; and

- combining the caustic solution produced in the preliminary leaching step with the slurry from the acid leaching step in the silica-precipitation step.

Hereby a reduced consumption of sulphuric acid may be obtained. When leaching with water in the preliminary leaching step there is obtained a caustic aqueous solution which is utilized in the silica-precipitation step as caustic aqueous solution. If the alkalinity obtained herewith is not sufficient sodium hydroxide may be added to the leaching liquor in the preliminary leaching step with resulting increased leaching efficiency.

According to a preferred embodiment the weakly caustic aqueous solution is a solution of sodium hydroxide having a sodium hydroxide contentration which allows the desired pH adjustment in the silica-precipitation step to be obtained without further addition of a separate caustic aqueous solution.

However, for the reasons explained above it is important that a pH value less than or equal to about 4.1 is maintained in the silica-precipitation step when the caustic solution produced in the preliminary leaching step is combined with the slurry from the acid leaching step.

The acid leaching step is preferably carried out within a period of time from about 0.5 to 3 h at a temperature within the interval from about 50 to 90 °C.

The duration of the preliminary leaching step is preferably from about 0.5 to 3 h and the preliminary leaching step is preferably carried out at a temperature within the interval from about 20 to 90 °C, preferentially at a temperature enabling the desired temperature setting in the silica-precipitation step to be achieved by simple mixing of the caustic solution produced in the preliminary leaching step with the slurry from the acid leaching step.

It is an advantage of the present process that rather coarse FCWM may be used as starting material. According to a preferred embodiment of the present invention the FCWM is only comminuted to a particle size of -7 mm before leaching.

The mixing of the reactants in the silica-precipitation step should be carried out with efficient agitation in order to prevent formation of local domains having a pH value above about 5, and thereby preventing undesired precipitation of ferro hydroxide and aluminium fluorides.

It is also important that the mixing of the reactants in the AlF$_2$OH hydrate precipitation step is carried out with efficient agitation preventing formation of local domains having a pH value above about 5 and thereby preventing undesired precipitation of ferro hydroxide and mixed aluminium fluorides, such as cryolite and chiolite.

The leaching of iron values occurs essentially during the acid leaching step. Due to the general presence of aluminium metal in the FCWM during the acid leaching process this process will generally proceed at reducing conditions ensuring that iron is leached as ferro ions. If the FCWM does not contain a sufficient amount of aluminium as aluminium metal the added aluminium should comprise a necessary quantity of aluminium in form of aluminium metal to ensure reducing conditions in the acid leaching step.

As mentioned above it is important that iron remains in solution as ferro ions. This may be ensured by operating under nitrogen atmosphere in the silica-precipitation step and the AlF$_2$OH hydrate precipitation step.

The process may be carried out batch-wise or continuously. In the latter case the abovementioned durations should be understood as average durations.

When a given FCWM is treated by the process according to the invention including a preliminary leaching process the necessary amount of aluminium and the necessary amount of sulphuric acid in the acid leaching liquor are calculated according to the rules given above. Hereby "Al" designates the number of moles of leachable aluminium in the FCWM introduced into the preliminary leaching process plus aluminium added, "Na" designates the number of moles of leachable sodium in the FCWM introduced into the preliminary leaching process plus the number of equivalents of caustic optionally added to the preliminary step and/or the silica-precipitation step, and "F" designates the number of moles of leachable fluorine in the FCWM introduced into the preliminary leaching process.

DETAILED DESCRIPTION

In the following the invention is further described with reference to the drawing which shows a schematic flow diagram for a preferred embodiment of the process according to the invention comprising a preliminary step in which the FCWM is leached with water and a silica-precipitation step comprising precipitating with an additional aqueous sodium hydroxide solution.

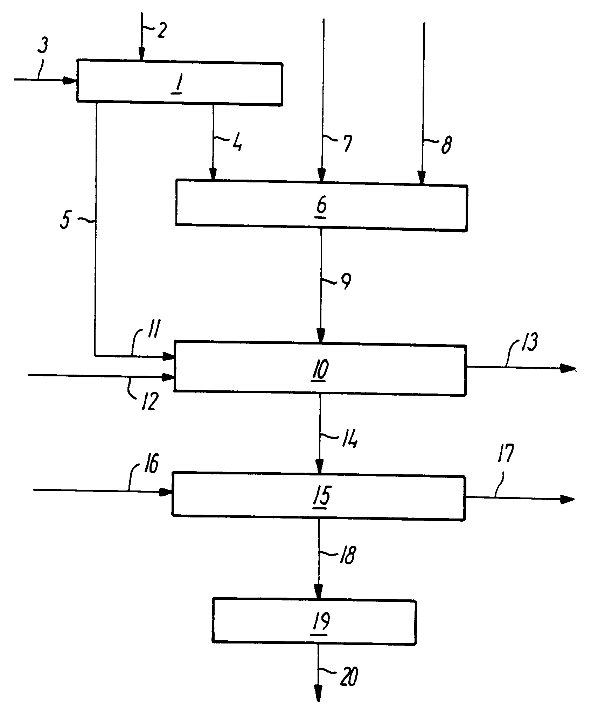

Fig. 1 shows a reactor 1 for the preliminary leaching process provided with an inlet 2 for FCWM and an inlet 3 for water, an outlet 4 for solid material and an outlet 5 for aqueous extract. The outlet 4 is connected with an inlet in a reactor 6 for the acid leaching process which is further provided with an inlet 7 for dilute sulphuric acid solution, an inlet 8 for aluminium hydroxide, and an outlet 9 for acid slurry. The outlet 9 is connected with a slurry inlet in a reactor 10 for the silica-precipitation process which has an inlet 11 for aqueous extract connected with the outlet 5, an inlet 12 for dilute aqueous solution of sodium hydroxide, and an outlet 13 for solid precipitated material and an outlet 14 for an acid solution which is connected with an inlet in a reactor 15 for precipitating $AlF_2(OH)$ which is further provided with an inlet 16 for dilute aqueous solution of sodium hydroxide, an outlet 17 for filtrate and an outlet 18 for the precipitated $AlF_2(OH)$ hydrate product which is connected with a material inlet in a calcining kiln 19 which has an outlet 20 for calcined $AlF_3$, $Al_2O_3$ product.

In operation SPL is subjected to extraction with water for 1 h in a leaching step in the leaching reactor 1 at a temperature of about 20 °C. A first fluorine sodium and aluminium containing caustic solution is withdrawn from the first leaching step via the outlet 5.

The solid material recovered from the first leaching step is via the outlet 4 transferred to a second leaching step in the reactor 6, aluminium hydroxide is added via the inlet 8, and the mixture is leached for 1 h with an aqueous solution of sulphuric acid introduced via the inlet 7 at a pH of about 0-2 at a temperature of about 85 °C.

After final leaching the acid slurry is transferred to the reactor 10, the temperature of the slurry is decreased to about 50 °C and the pH value is carefully raised to about 4 by introducing the aqueous extract from the reactor 1 and additional aqueous sodium hydroxide via the inlets 11 and 12, respectively.

The temperature of this mixture is kept at about 50 °C for about 1 h whereby silica is precipitated.

After removal of solid material (including the leached SPL) a clear aqueous solution is obtained and transferred, via the outlet 14, to the $AlF_2OH$ hydrate precipitation step in the reactor 15 where the temperature is increased to and kept at a temperature about 95 °C. Hereby the pH value decreases to about 2 presumably due to the reaction

$$AlF_2^+ + H_2O \rightarrow AlF_2(OH) + H^+$$

$AlF_2(OH)$ is precipitated by continuous addition of aqueous sodium hydroxide solution introduced via the inlet 16 whereby it is ensured that the pH value of the solution is gradually increased to a value within the interval from about 3.7 to 4.1.

At the end of the precipitation period the reaction mixture is subjected to filtration, the aqueous filtrate is withdrawn via the outlet 17 and the $AlF_2(OH)$ hydrate product is withdrawn, washed with water, and transferred to the calcining kiln 19.

Finally, the $AlF_2(OH)$ hydrate is calcined at about 550 °C to form a mixture of $AlF_3$ and $Al_2O_3$.

In order to ensure that all iron remains as ferro iron the silica-precipitation step and the $AlF_2OH$ hydrate precipitation step are carried out under a nitrogen atmosphere.

In the following the invention is further illustrated by examples, in which "%" is to be understood as weight-% unless otherwise indicated.

EXAMPLE 1

SPL from Gränges Aluminium, Sweden, with the following analysis: 15.85% Na, 10.75% Al and 14.42% F was crushed in a mill to -7 mm. 60 g of this material corresponding to 413 mmol Na, 239 mmol Al and 455 mmol F (F/Al=1.90) were extracted for 1 h at 90 °C with a mixture of 75 g of 9N sulfuric acid and 500 ml of demineralized water. At the end of the leaching process the aqueous phase in the slurry exhibited a pH of 2.2 and Al and F concentrations corresponding to 213.8 and 425.0 mmol, respectively.

The extraction yields obtained by the leaching process were 89.5% Al and 93.3% F. The molar ratio F/Al was 1.99 in the aqueous phase.

The slurry was cooled to 40 °C and neutralized with NaOH to pH 4.0 in 30 min. and allowed to age during a 1 h period before filtration. The solid material obtained by filtration was dried and weighed. On this basis it was calculated that 51.5% of the FCWM were dissolved during the extraction.

The temperature of the filtrate was increased to 90 °C and $AlF_2OH$ hydrate was precipitated by neutralizing with dilute NaOH according to the following scheme, nitrogen being bubbled through the solution to avoid formation of ferric ions:

| Time, min | pH Setpoint | pH* | ml used |
|---|---|---|---|
| 5 | 2.9 | 2.2 | 22 |
| 5 | 3.0 | 2.25 | 22 |
| 5 | 3.1 | 2.3 | 20 |
| 5 | 3.3 | NA | 17 |
| 5 | 3.9 | 3.5 | 4 |
| 5 | 3.9 | 3.55 | 1 |
| 5 | 3.9 | 3.75 | 1.5 |
| 5 | 3.9 | 3.8 | 0.5 |
| Total neutralization time 40 min. Total amount of used NaOH solution 88 ml. | | | |

\* pH value at the end of the neutralization sub-step.

The filtrate had a pH of 4.1 and contained 4.3 mmol Al and 12.6 mmol F corresponding to a precipitation yield of 97.6% Al and 96.7% F.

After drying an end product consisting of $AlF_2OH$, $H_2O$ was obtained. Yield: 19.9 g. This product had the analysis shown in table 1.

As the extraction yield was on the low side, an identical run was made using 90 g of 9N sulphuric acid. The pH was 1.5 and Al and F concentrations corresponding to 222.2 and 438.5 mmol, respectively. The extraction yields in the leaching step were thereby increased to 93% Al and 96%F.

EXAMPLE 2

180 g SPL from Gränges Aluminium, Sweden, from the same batch as described in example 1 were extracted with 1 l of demineralized water for 1 h at 90 °C in a preliminary leaching step. Hereby 13.3% of the SPL were dissolved. The extract was left over night, and some minor precipitation took place.

The solid residue was separated by filtration and extracted at 90 °C in an acid leaching step for 1 h with 205 ml 9N sulfuric acid and 1000 ml water. After cooling of the slurry to room temperature the pH was 1.05.

The extract from the preliminary leaching step was added to the slurry whereby the pH value increased to 2.1. Thereafter the pH value was increased to 4.0 by addition of 55 ml of dilute NaOH. The temperature was then raised to 60 °C for 1 h and at the end of this period the slurry was subjected to filtration.

The temperature of the filtrate was increased to 90 °C and $AlF_2OH$ hydrate was precipitated by neutralizing with dilute NaOH according to the following scheme, nitrogen being bubbled through the solution to avoid formation of ferric ions:

| Time, min | pH Setpoint | pH* | ml used |
|---|---|---|---|
| 5 | 3.2 | 2.6 | 16 |
| 5 | 3.3 | 2.55 | 20 |
| 5 | 3.4 | 2.65 | 21 |
| 5 | 3.5 | 2.6 | 21 |
| 5 | 3.6 | 2.6 | 19 |
| 5 | 3.7 | 2.75 | 40 |
| 5 | 3.8 | 2.75 | 35 |
| 5 | 3.8 | 2.8 | 23 |
| 5 | 3.8 | 3.05 | 28 |
| 5 | 3.8 | 3.5 | 29 |
| 5 | 3.9 | 3.65 | 12 |

Total neutralization time 55 min.
Total amount of used NaOH solution 264 ml.

\* pH value at the end of the neutralization sub-step.

The filtrate had a pH of 3.7 and contained 124.1 mmol F corresponding to a precipitation yield of 89.8% F.

After drying an end product consisting of $AlF_2OH$, $H_2O$ was obtained. Yield: 58.06 g. This product had the analysis shown in table 1.

EXAMPLE 3

An SPLA from Comalco having the following composition:
20.0% Na, 12.7% Al, 23.5% F, 1.54% Fe and 0.96% Ca (F/Al ratio: 2.6) was used in this example.

140 g of SPLA and 23.32 g of $Al(OH)_3$ were digested for 1.5 h at 90-100 °C with 260 ml 9N sulfuric acid and 1200 ml of demineralized water in an acid leaching step. The resulting slurry was cooled to 60 °C, neutralized to pH 4.0 with dilute NaOH solution, and filtrated.

The temperature of the filtrate was increased to 90 °C and $AlF_2OH$ hydrate was precipitated by neutralizing with dilute NaOH according to the following scheme, nitrogen being bubbled through the solution to avoid formation of ferric ions:

9

| Time, min | pH Setpoint | pH* | ml used |
|---|---|---|---|
| 5 | 2.7 | 1.8 | 37 |
| 5 | 2.7 | 1.8 | 37 |
| 5 | 2.7 | 1.85 | 41 |
| 5 | 2.8 | 2.0 | 30 |
| 5 | 3.0 | 2.25 | 42 |
| 5 | 3.3 | 2.5 | 42 |
| 5 | 3.6 | 2.7 | 37 |
| 5 | 3.6 | 3.1 | 32 |
| 5 | 3.6 | 3.25 | 16 |
| 5 | 3.7 | 3.45 | 9 |
| 5 | 3.7 | 3.55 | 6 |

Total neutralization time 55 min.
Total amount of used NaOH solution 329 ml.

\* pH value at the end of the neutralization sub-step.

The filtrate had a pH of 3.6 and contained 73.9 mmol F corresponding to a precipitation yield of 94.9% F.

After drying an end product consisting of $AlF_2OH,H_2O$ was obtained. Yield: 76.9 g. This product had the analysis shown in table 1.

EXAMPLE 4

To illustrate the possibility of extracting cold bath containing large amounts of sodium aluminium fluorides, neutral cryolite containing 12.69% Al and 54.12% F (F/Al=6.1) was digested at 90 °C for 1 h with a mixture of dilute sulfuric acid and a solution of $Al_2(SO_4)_3$ in an acid leaching step. The indicated amounts of added $Al_2(SO_4)_3$ and sulphuric acid were calculated to provide a F/Al-ratio of 2.0 in the mixture and a ("Na"/2 + "F"/4)/"SO⁻⁻4" ratio less than 1:

189 mmol Al
360 mmol F
25 ml of 9N $H_2SO_4$

Total volume 375 ml.

Since the starting material did not contain silica or silicate no silica-precipitation step was performed. Therefore the mixture obtained in the acid leaching step was directly subjected to filtration in order to remove a minor amount of undissolved material.

The pH value of the filtrate was 1.15 and the F/Al ratio 1.94.

The temperature of the filtrate was increased to 95 °C and $AlF_2OH$ hydrate was precipitated by addition of dilute NaOH during a 0.5 h period under vigorous agitation.

The yield was 6.41 g of $AlF_2(OH),H_2O$. The analysis of the product is shown in table 1.

TABLE 1

| Analysis | | | | | | | |
|---|---|---|---|---|---|---|---|
| | Na, % | Al, % | F, % | $SiO_2$, % | Fe, % | LOI, % | F/Al % |
| Examp. 1 | 3.7 | 24.0 | 35.0 | 0.05 | 0.01 | 22.8 | 2.07 |
| - 2 | 3.2 | 25.4 | 35.9 | 0.05 | 0.07 | 21.6 | 2.02 |
| - 3 | 3.3 | 25.6 | 34.2 | 0.02 | 0.05 | 22.1 | 1.90 |
| - 4 | 3.3 | 26.2 | 36.0 | NA | NA | 25.5 | 1.95 |
| LOI, i.e. loss on ignition, was determined at 600 °C. NA, i.e. not analyzed. | | | | | | | |

It appears clearly from these data that a uniform end product may be produced by the present method from starting products showing great variation in chemical composition.

## Claims

1. A process for recovering aluminium and fluorine from fluoride containing waste material (FCWM)as $AlF_2OH$ hydrate comprising:

   - leaching FCWM with dilute sulphuric acid in an acid leaching step to produce an acid slurry containing fluorine, sodium and aluminium dissolved in the aqueous phase;

   - if needed, adjusting the amount of dissolved aluminium in the acid leaching step by addition of aluminium metal and/or acid soluble aluminium compounds so that the molar ratio "F"/"Al" is within the interval from about 1.8 to 2.2, where "F" designates the number of moles of leachable fluorine in the treated portion of FCWM and "Al" designates the number of moles of leachable aluminium in the treated portion of FCWM plus optionally added aluminium;

   - adjusting the amount of sulphuric acid added in the acid leaching step so that

     i) the molar ratio

     $$("Na"/2 + "F"/4)/"SO^{--}_4"$$

     is less than or equal to 1,
     where "Na" designates the number of moles of leachable sodium in the treated portion of FCWM plus the number of equivalents of caustic optionally added to the process in the steps preceeding a final $AlF_2OH$ precipitation step and "$SO^{--}_4$" designates the number of moles of sulfate ions added as $H_2SO_4$ or otherwise; and
     ii) the pH value of the aqueous phase in the aqueous slurry is kept within a range from about 0 to 3, preferably from about 1 to 2, during and at the termination of the leaching step;

   - withdrawing the acid slurry from the acid leaching step;

   - adjusting the pH of the aqueous phase in the slurry withdrawn from the acid leaching step to a value within the range from about 3.7 to 4.1 by addition of a caustic aqueous solution, preferably of sodium hydroxide, in a silica-precipitation step, at a temperature not exceeding 60 °C; and allowing silica to precipitate during a precipitation, ageing and sedimentation period of not less than 0.5-1 h;

   - separating the reaction mixture from the silica-precipitation step into a solid phase containing the precipitated silica and the non-soluble residues of the FCWM and a purified solution containing aluminium, fluorine and sodium as main components and iron as $Fe^{++}$ ions;

- precipitating $AlF_2OH$ hydrate from the purified solution withdrawn from the silica precipitation step in an $AlF_2OH$ precipitation step by increasing the temperature of the solution to and maintaining the temperature at a value within the inverval from about 90 °C to the boiling point of the aqueous phase, gradually increasing the pH value to about 3.7 to 4.1 by controlled continuous addition of an aqueous caustic solution, e.g. of sodium hydroxide;

- maintaining reducing and/or non-oxidizing operating conditions during the acid leaching step, the silica precipitation step and the $AlF_2OH$ precipitation step in order to prevent oxidation of $Fe^{++}$ to $Fe^{+++}$; and

- separating and withdrawing the precipitated $AlF_2OH$ hydrate from the $AlF_2OH$ precipitation step.

2. A process according to claim 1, **characterized** in

- subjecting the FCWM to a preliminary leaching process in a preliminary leaching step in which FCWM is leached with water or a weakly caustic aqueous leaching solution, e.g. of sodium hydroxide, to produce a first fluorine, sodium and aluminium containing caustic solution and a solid pre-leached FCWM;

- transferring the pre-leached FCWM to the acid leaching step; and

- combining the caustic solution produced in the preliminary leaching step with the slurry from the acid leaching step in the silica-precipitation step.

3. A process according to claim 2, **characterized** in that the weakly caustic aqueous leaching solution is a solution of sodium hydroxide having a sodium hydroxide concentration which allows the desired pH adjustment in the silica-precipitation step to be obtained without further addition of a separate caustic aqueous solution.

4. A process according to claims 1-3, **characterized** in that the acid leaching step is carried out at a temperature within the inverval from about 50 to 90 °C.

5. A process according to claims 1-4, **characterized** in that the acid leaching step is carried out within a period of time from about 0.5 to 3 h.

6. A process according to claims 2-5, **characterized** in that the preliminary leaching step is carried out at a temperature within the interval from about 20 to 90 °C

7. A process according to claims 2-6, **characterized** in that the preliminary leaching step is carried out within a period of time from about 0.5 to 3 h.

8. A process according to claims 1-6, **characterized** in that the FCWM is comminuted to a particle size of -7 mm before leaching.

9. A process according to claims 1-8, **characterized** in that the mixing of the reactants in the silica-precipitation step is carried out with efficient agitation in order to prevent formation of local domains having a pH value above about 5.

10. A process according to claims 1-9, **characterized** in that the mixing of the reactants in the $AlF_2OH$ hydrate precipitation step is carried out with efficient agitation in order to prevent formation of local domains having a pH value above about 5.

11. A process according to claims 1-10, **characterized** in that the reducing operating conditions are ensured by hydrogen formation during the acid leaching step and by operating under nitrogen atmosphere in the silica-precipitation step and the $AlF_2OH$ hydrate precipitation step.

12. A process according to claims 1-11, **characterized** in that the precipitated $AlF_2OH$ hydrate withdrawn from the precipitation step is calcined to produce a mixture of $AlF_3$ and $Al_2O_3$ at a temperature within the interval from about 500 to 600 °C.

**Patentansprüche**

1.  Verfahren zur Rückgewinnung von Aluminium und Fluor aus fluorhaltigen Abfällen (FCWM) als $AlF_2OH$-Hydrat umfassend:

    -   Auslaugen der FCWM mit verdünnter Schwefelsäure in einem sauren Auslaugeschritt, um eine saure Aufschlämmung herzustellen, welche in der wässerigen Phase gelöstes Fluor, Natrium und Aluminium enthält;

    -   falls erforderlich, Einstellen der Menge an im sauren Auslaugeschritt gelöstem Aluminium durch die Zugabe von Aluminiummetall und/oder säurelöslichen Aluminiumverbindungen derart, dass sich das molare Verhältnis "F"/"Al" innerhalb eines Bereichs von etwa 1,8 bis 2,2 befindet, wobei "F" die Anzahl Mole von auslaugbarem Fluor im behandelten Anteil vom FCWM bedeutet und "Al" die Anzahl Mole von auslaugbarem Aluminium im behandelten Anteil vom FCWM sowie gegebenenfalls zusätzlich zugefügtem Aluminium bedeutet;

    -   Einstellen der im sauren Auslaugeschritt zugeführten Menge an Schwefelsäure derart, dass

        i) das molare Verhältnis

        $$("Na"/2 + "F"/4)/"SO^{--}_4"$$

        kleiner oder gleich 1 ist,
        wobei "Na" die Anzahl Mole von auslaugbarem Natrium im behandelten Anteil vom FCWM sowie die Anzahl Alkaliäquivalente bezeichnet, welche gegebenenfalls dem Prozess beigefügt werden in den Schritten vor einem am Schluss ablaufenden $AlF_2OH$-Ausfällschritt, und wobei "$SO^{--}_4$" die Anzahl Mole von Sulfationen bezeichnet, welche als $H_2SO_4$ oder andersartig zugegeben werden; und
        ii) der pH-Wert der wässerigen Phase in der wässerigen Aufschlämmung innerhalb eines Bereich von etwa 0 bis 3 gehalten wird, vorzugsweise zwischen etwa 1 und 2, während und beim Abschluss des Auslaugeschrittes;

    -   Entfernen der sauren Aufschlämmung vom sauren Auslaugeschritt;

    -   Einstellen des pH der wässerigen Phase in der Aufschlämmung, welche vom sauren Auslaugeschritt entfernt wurde, auf einen Wert innerhalb des Bereiches von etwa 3,7 bis 4,1 durch Zufügen einer wässerigen Lösung von Alkali, vorzugsweise von Natriumhydroxid, in einem Siliciumdioxidfällschritt, bei einer Temperatur, welche 60°C nicht übersteigt;
        und
        Ausfällenlassen des Siliciumdioxids während einer Ausfäll-, Reifungs und Sedimentationsphase von nicht weniger als 0,5 bis 1 Stunde;

    -   Trennen der Raktionsmischung vom Siliciumdioxidfällschritt in eine feste Phase enthaltend das ausgefällte Siliciumdioxid und die nichtlöslichen Rückstände vom FCWM und eine gereinigte Losung enthaltend Aluminium, Fluor und Natrium als Hauptbestandteile und Eisen in Form von $Fe^{++}$-Ionen;

    -   Ausfällen der $AlF_2OH$-Hydrate aus der gereinigten Lösung, welche vom Siliciumdioxidfällschritt entfernt wurde, in einem $AlF_2OH$-Fällschritt durch Erhöhen der Temperatur der Lösung und durch Halten der Temperatur auf einem Wert innerhalb des Bereiches von etwa 90°C und des Siedepunktes der wässerigen Phase, schrittweises Erhöhen des pH-Wertes auf etwa 3,7 bis 4,1 durch die kontrollierte, kontinuierliche Zugabe einer wässerigen Lösung von Alkali, beispielsweise Natriumhydroxid;

    -   Aufrechterhalten reduzierender und/oder nichtoxidierender Verfahrensbedingungen während des sauren Auslaugeschrittes, des Siliciumdioxidfällungschrittes und des $AlF_2OH$-Fällungsschrittes um die Oxidation von $Fe^{++}$ zu $Fe^{+++}$ zu verhindern; und

    -   Trennen und Entfernen der ausgefällten $AlF_2OH$-Hydrate aus dem $AlF_2OH$-Fällungsschritt.

2.  Verfahren gemäss Anspruch 1, dadurch gekennzeichnet, dass

    -   das FCWM in einem vorausgehenden Auslageverfahren einem vorausgehenden Auslaugeschritt unterworfen wird, in welchem das FCWM mit Wasser oder einer schwach alkalischen, wässerigen Auslaugelösung, zum Beispiel Natriumhydroxid, ausgelaugt wird, um eine erste, Fluor, Natrium und Aluminium enthaltende ätzende Lösung sowie ein festes, vorausgelaugtes FCWM zu erzeugen;

- das vorausgelaugte FCWM einem sauren Auslaugeschritt zugeführt wird; und

- die ätzende Lösung, welche im vorausgehenden Auslageschritt produziert wurde, mit der Aufschlämmung des sauren Auslageschrittes Zusammengeführt wird in den Siliciumdioxidfällungschritt.

3. Verfahren gemäss Anspruch 2, dadurch gekennzeichnet, dass die schwach ätzende wässerige Auslaugelösung eine Lösung aus Natriumhydroxid ist mit einer Natriumhydroxidkonzentration, welche ohne weitere Zugabe einer separaten ätzenden wässerigen Lösung ein Einstellen des gewünschten pH-Wertes im Siliciumdioxidfällungschritt zu erreichen erlaubt.

4. Verfahren gemäss den Ansprüchen 1 bis 3, dadurch gekennzeichnet, dass der saure Auslaugeschritt bei einer Temperatur innerhalb des Bereichs von etwa 50 bis 90 °C ausgeführt wird.

5. Verfahren gemäss den Ansprüchen 1 bis 4, dadurch gekennzeichnet, dass der saure Auslaugeschritt innerhalb einer Zeitdauer von etwa 0,5 bis 3 Stunden durchgeführt wird.

6. Verfahren gemäss den Ansprüchen 2 bis 5, dadurch gekennzeichnet, dass der vorausgehende Auslaugeschritt bei einer Temperatur innerhalb des Bereichs von etwa 20 bis 90 °C ausgeführt wird.

7. Verfahren gemäss den Ansprüchen 2 bis 6, dadurch gekennzeichnet, dass der vorausgehende Auslaugeschritt innerhalb einer Zeitdauer von etwa 0,5 bis 3 Stunden durchgeführt wird.

8. Verfahren gemäss den Ansprüchen 1 bis 6, dadurch gekennzeichnet, dass das FCWM vor dem auslaugen zu einer Partikelgrösse von -7 mm zerkleinert werden.

9. Verfahren gemäss den Ansprüchen 1 bis 8, dadurch gekennzeichnet, dass die Mischung der Reaktionsmittel im Siliciumdioxidfällungschritt unter leistungsfähigem Rühren durchgeführt wird, um die Ausbildung lokaler Bereiche mit einem pH-Wert von etwa über 5 zu verhindern.

10. Verfahren gemäss den Ansprüchen 1 bis 9, dadurch gekennzeichnet, dass die Mischung der Reaktionsmittel im AlF$_2$OH-Hydrate-Fällschritt unter leistungsfähigem Rühren durchgeführt wird, um die Ausbildung lokaler Bereiche aufweisend einen pH-Wert von etwa über 5 zu verhindern.

11. Verfahren gemäss den Ansprüchen 1 bis 10, dadurch gekennzeichnet, dass die reduzierenden Verfahrensbedingungen sichergestellt werden durch Hydrogenbildung während des sauren Auslaugeschrittes und durch Arbeiten unter einer Stickstoffatmosphäre während des Siliciumdioxidfällschrittes und des AlF$_2$OH-Hydrat-Fällschrittes.

12. Verfahren gemäss den Ansprüchen 1 bis 11, dadurch gekennzeichnet, dass das ausgefällte AlF$_2$OH-Hydrat, welche aus dem Fällschritt entfernt wurden, bei einer Temperatur innerhalb des Bereichs von etwa 500 bis 600 °C kalziniert werden, um eine Mischung von AlF$_3$ und Al$_2$O$_3$ zu erzeugen.

## Revendications

1. Procédé pour récupérer de l'aluminium et du fluor à partir de déchets contenant du fluor (DCF), sous la forme de l'hydrate AlF$_2$OH, consistant à :

- lessiver les DFC avec de l'acide sulfurique dilué dans une étape de lessivage acide, pour produire une pâte acide contenant du fluor, du sodium et de l'aluminium, dissous dans la phase aqueuse;

- lorsque cela est nécessaire, ajuster la quantité d'aluminium dissous dans l'étape de lessivage acide par l'addition d'aluminium métal et/ou de composés acides solubles de l'aluminium, de manière à ce que le rapport molaire "F"/"Al" soit dans la plage allant d'environ 1,8 à 2,2, où "F" indique le nombre de moles de fluor lessivable dans la portion traitée des DCF et "Al" indique le nombre de moles d'aluminium lessivable dans la portion traitée des DCF, plus l,aluminium éventuellement ajouté;

- ajuster la quantité d'acide sulfurique ajouté dans l'étape de lessivage de manière à ce que :

i) le rapport molaire

$$("Na"/2 + "F"/4)/"SO^{--}_4"$$

soit inférieur ou égal à 1,
où "Na" indique le nombre de moles de sodium lessivable dans la portion traitée des DCF, plus le nombre d'équivalents de l'agent caustique, ajouté éventuellement au cours des étapes précédant l'étape finale de précipitation de l'AlF$_2$OH et
"SO$^{--}_4$" indique le nombre de moles d'ions sulfate ajoutés comme H$_2$SO$_4$ ou sous une autre forme; et

ii) la valeur du pH de la phase aqueuse dans la pâte aqueuse soit maintenue dans une plage allant d'environ 0 à 3, de préférence d'environ 1 à 2 durant et à la fin de l'étape de lessivage;

- séparer la pâte acide de l'étape de lessivage acide;

- ajuster le pH de la phase aqueuse dans la pâte obtenue à l'étape de lessivage acide à une valeur dans la plage allant d'environ 3,7 à 4,1, par l'addition d'une solution aqueuse d'un agent caustique, de préférence l'hydroxyde de sodium, dans une étape de précipitation de la silice, à une température ne dépassant pas 60°C; et permettre à la silice de précipiter durant une période de précipitation, de vieillissement et de sédimentation, qui n'est pas inférieure à 0,5-1 h;

- séparer le mélange réactionnel de l'étape de précipitation de la silice en une phase solide contenant la silice précipitée et les résidus non solubles des DCF et une solution purifiée contenant l'aluminium, le fluor et le sodium comme composants principaux, ainsi que du fer soins la forme d'ions Fe$^{--}$;

- précipiter l'hydrate AlF$_2$OH de la solution purifiée obtenue à l'étape de précipitation de la silice dans une étape de précipitation de l'AlF$_2$OH, en augmentant la température de la solution et en la maintenant à une valeur dans la plage allant d'environ 90°C au point d'ébullition de la phase aqueuse, en augmentant graduellement le valeur du pH à une valeur dans la plage allant d'environ 3,7 à 4,1 par l'addition continue contrôlée d'une solution aqueuse d'un agent caustique, comme par exemple l'hydroxyde de sodium;

- maintenir des conditions opératoires réductrices et/ou non oxydantes durant l'étape de lessivage acide, l'étape de précipitation de la silice et l'étape de précipitation de l'AlF$_2$OH, pour empêcher l'oxydation du Fe$^{--}$ en F$^{---}$; et à

- séparer et isoler l'hydrate AlF$_2$OH précipité dans l'étape de précipitation de l'AlF$_2$OH.

2. Procédé selon la revendication 1, caractérisé en ce que l'on :

- soumet les DCF à un procédé préliminaire de lessivage dans une étape de lessivage préliminaire dans laquelle les DCF sont lessives avec de l'eau ou une solution de lessivage aqueuse rendue faiblement caustique, par exemple par de l'hydroxyde de sodium, pour produire une première solution caustique contenant du fluor, du sodium, de l'aluminium et des DCF solides pré-lessivés;

- que l'ou transfère les DCF pré-lessivés à l'étape de lessivage acide ;

- et que l'on combine la solution caustique produite dans l'étape de lessivage préliminaire avec la pâte de l'étape de lessivage acide, dans l'étape de précipitation de la silice.

3. Procédé selon la revendication 2, caractérisé en ce que la solution aqueuse de lessivage faiblement caustique est une solution d'hydroxyde de sodium, ayant une concentration d'hydroxyde de sodium qui permet d'obtenir l'ajustement de pH souhaité dans l'étape de précipitation de la silice, sans autre addition d'une solution caustique aqueuse séparée.

4. Procédé selon les revendications 1-3, caractérisé en ce que ladite étape de lessivage acide se fait à une température dans la plage allant d'environ 50 à 90°C.

5. Procédé selon les revendications 1-4, caractérisé en a que l'étape de lessivage acide se fait en une durée de temps d'environ 0,5 à 3 h.

6. Procédé selon les revendications 2-5, caractérisé en ce que l'étape de lessivage préliminaire se fait à une température dans la plage allant d'environ 20 à 90°C.

7. Procédé selon les revendications 2-6, caractérisé en ce que l'étape de lessivage préliminaire se fait en une durée de temps d'environ 0,5 à 3 h.

8. Procédé selon les revendications 1-6, caractérisé en ce que les DCF sont broyés avant le lessivage, pour avoir une granulométrie inférieure à 7 mm.

9. Procédé selon les revendications 1-8, caractérisé en ce que le mélange des réactifs dans l'étape de précipitation de la silice se fait avec une agitation efficace pour empêcher la formation de domaines locaux ayant une valeur de pH supérieure à environ 5.

10. Procédé selon les revendications 1-9, caractérisé en ce que le mélange de réactifs, lors de l'étape de précipitation de l'hydrate $AlF_2OH$, se fait avec une agitation efficace, pour empêcher la formation de domaines locaux ayant une valeur de pH supérieure à environ 5.

11. Procédé selon les revendications 1-10, caractérisé en ce que les condition opératoires réductrices sont assurées par la formation d'hydrogène durant l'étape de lessivage acide et en opérant sous une atmosphère d'azote dans l'étape de précipitation de la silice et celle de précipitation de l'hydrate $AlF_2OH$.

12. Procédé selon les revendications 1-11, caractérisé en ce que l'hydrate précipité $AlF_2OH$, séparé dans l'étape de précipitation, est calciné pour produire un mélange d'$AlF_3$ et d'$Al_2O_3$, à une température dans la plage allant d'environ 500 à 600°C.